## Europäisches Patentamt

(19) **European Patent Office**

**Office européen des brevets**

(11) Publication number: **0 296 268 B1**

# EUROPEAN PATENT SPECIFICATION

(45) Date of publication of the patent specification: **22.08.90**

(51) Int. Cl.⁵: **F16K 31/163, E21B 34/02, F16K 47/00**

(21) Application number: **87109112.0**

(22) Date of filing: **24.06.87**

(54) Single acting hydraulic actuator with variable return force.

(43) Date of publication of application:
**28.12.88 Bulletin 88/52**

(45) Publication of the grant of the patent:
**22.08.90 Bulletin 90/34**

(84) Designated Contracting States:
**AT BE CH DE FR GB IT LI LU NL SE**

(56) References cited:
**DE-A- 2 259 932**
**FR-A- 764 407**
**FR-A- 2 304 957**
**US-A- 4 519 575**
**US-A- 4 527 631**

(73) Proprietor: **Skarpenord Control Systems a.s.,
Sahelmsvelen 2, N-3660 Rjukan(NO)**

(72) Inventor: **Helm, Edgar, Villavn. 33, N-3660 Rjukan(NO)**
Inventor: **Sande, Kurt, Riislokka 47A,
N-1660 Fredrikstad(NO)**
Inventor: **Staaland, Torbjorn, Krystallvn. 14,
N-4875 Nedenes(NO)**

(74) Representative: **Fincke, Karl Theodor, Dipl.-Phys.Dr. et
al, Patentanwälte Dipl.-Ing. H.Weickmann Dipl.-Phys.Dr.
K.Fincke Dipl.-Ing. F.A.Weickmann Dipl.-Chem. B. Huber
Dr. Ing. H. Liska Dipl.-Phys.Dr. J. Prechtel
Möhlstrasse 22, D-8000 München 80(DE)**

## Description

This invention relates to a single acting hydraulic actuator with variable return force which is suited for automatic control of safety valves and for rapid closure of such valves in emergency situations, according to the preamble of claim 1.

Such single acting hydraulic actuators are normally used to work on gate valves and are mounted directly to a valve stem which is movable for opening as well as for closing of the valve. An example of practical utilization in the oil industry is on the so-called X-mas Trees, as emergency blow out preventor valves for the main production stream of hydrocarbons, where the valves will be closed safely and efficiently when an abnormal situation arises. Such valve actuators are known for use both in sub sea and in top side equipment, for example on the deck of an offshore oil production platform. Such actuators will normally be mounted directly on the bonnet of the valve and the piston rod of the actuator will be connected to the valve spindle for control and regulation of the valve. As long as the control circuit is pressurized the valve rod or spindle is moved to and kept in open position and a spring in the actuator is tensioned or loaded. When pressure is removed the pressure or force of the spring will be released and art via the piston rod directly on the valve spindle and move this against the frictional resistance of the valve to a position where the valve is completely closed.

Known valve actuators of this type, specified, by way of example, in U.S. Patent No. 4 527 631, and in the brochure "Model "OHH" Linear Hydraulic Gate Valve Actuator" – AVA-International – of February 7, 1984, have direct connection between the valve spindle and the spring mechanism. This implicates that when the spring is extended 10 mm, the valve spindle will have moved a corresponding distance. This is unpractical and inconvenient due to the fact that the demand for available closing powers usually is highest when the spring is depressurized and near the end of its extension.

Furthermore, it is a requirement that the valve in addition to securing efficient closure also should have the capacity to cut through a possible hindrance, such as tubes, wires, and the like, which are blocking the free closure of the gate valve within the bore or in the tube string. This has resulted in that the actuator equipment is voluminous and requires a great deal of space. Correspondingly, the dimensions of the spring are very great, the spring mechanism itself having an extended length of 1.5 m or more.

FR-A 2 304 957 discloses an actuator according to the preamble of claim 1, the bottom side of the spring guiding member having a radial inner area in a plane orthogonal to its axis and a radial outer area also in a plane orthogonal to its axis but offset to the inner area in the direction of the spring mechanism.

It is the object of the present invention to provide an actuator according to the preamble of claim 1 with variable return force not having the above-mentioned drawbacks where, by utilization of a compact and space-saving spring mechanism, there can be established closing powers which are precisely adapted to the closing characteristics of the valve mechanism and furthermore, where near the end of the spring movement high closing powers are available to cut through possible obstructing objects preventing the closing of the valve.

According to the invention, this object is accomplished by the features recited in the characterizing part of claim 1. The actuator according to claim 1 can be built with a sturdy spring mechanism having brief but very powerful closing characteristics, where the energy from the spring mechanism is distributed over the complete closing movement of the valve, and where the energy or the power output can be varied and adapted to the need in different areas using the strongest forces, for example where it may be necessary to cut through obstructing objects and for the closing of the valve in its outermost position.

Specific useful embodiments of the actuator according to claim 1 are recited in claims 2 and 3.

Below, the invention will be described more closely in connection with a preferred embodiment which also is illustrated on the drawing, Fig. 1 to 3. The same reference numbers are used throughout the documents to identify identical parts on the drawings.

Fig. 1 illustrates partly in longitudinal, sectional view, the actuator with the spring mechanism in released and deactivated state.

Fig. 2 illustrates a corresponding longitudinal, sectional view through the complete actuator, but where the upper half illustrates the spring mechanism in deactivated state and where the lower half illustrates the spring mechanism in tensioned or "loaded" state. Additionally, it is demonstrated how the short movement of the spring mechanism is transformed via a specific displacement mechanism according to the invention to the valve spindle, which is performing an extended movement under variable power output.

Fig. 3 is a diagram illustrating the power output through the tensioning or loading and detensioning or releasing or the spring mechanism.

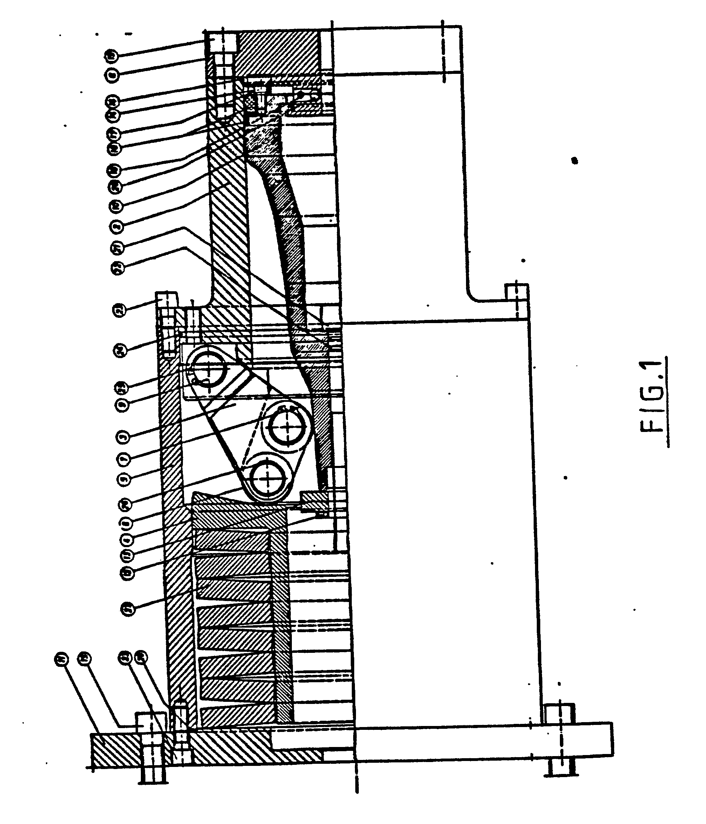

As is apparent from Fig. 1, upper sectional half, the actuator unit is made from a cylinder 2 wherein is slidably mounted a piston 10. Via a lever 3 and a spring guiding member 4, the piston 10 is connected to and in engagement with a spring mechanism 27 consisting of a number of plate springs. On the drawing, the spring mechanism 27 is shown detensioned and this results in the piston 10 being in its outermost right position. The spring mechanism 27 and the spring guiding member 4 are mounted in a housing 5 which is attached to the cylinder 2 by means of bolts 23. An O-ring 24 is sealing the connection between the housing 5 and the cylinder 2. A cover 6 is attached by means of screw bolts 15 to the end section of the cylinder 2. Pressurized fluid to the cylinder 2 and the piston 10 is introduced via an inlet opening in the middle part of the cover 6. An O-ring 16 is providing a sealed airtight connection between the cover 6 and the cylinder 2. A pressure sleeve 19 and a ball 20 are terminating the inlet flange of the cover. A packing system 18 of the piston 10 is kept in position by means of a piston ring 14 which is connected to the piston 10 with screw members 17. To obtain permanent and safe support of the piston 10 in its circumferential direction, there are provided three levers 3 one of which is shown in Fig. 1. The levers 3 are rotatably mounted in studs or ears on the housing 5 by means of shafts 9 which are kept in position by means of segerrings 25.

The opposite end of the lever 3 is provided with a spring guiding roller 8 which is rotating in glider bearings 26 and is engaged against the outer bottom side of the spring guiding member 4. Additionally, at the lower edge of the lever 3 there is provided a piston rod roller 7 which is fastened and supported correspondingly to the roller 8 and which is supported against an inclined outer contour machined in the surface of the piston rod.

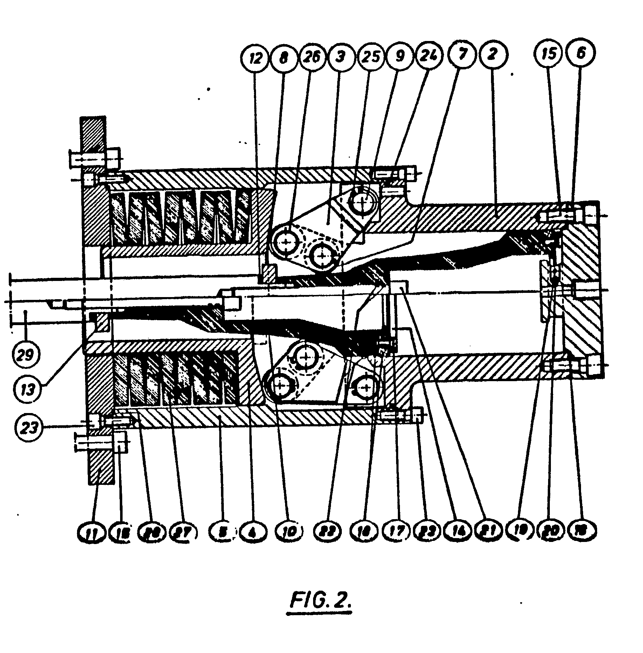

The actuator housing 5 is defined by a flange 11 which is connected to the housing 5 by means of bolts 23, and a packing cord 28 provides sealing engagement between the housing 5 and the flange 11. Furthermore, the flange 11 is provided with bolts 15 or the like, for connecting it to a bonnet of a gate valve (not shown). The piston 10 is directly connected to a valve spindle 29 and moves this forwards and backwards. The spindle 29 is not shown in Fig. 1, but is outlined in Fig. 2 in its two end positions. The valve spindle 29 is firmly connected to the piston 10 and the piston rod by means of a bolt 21. Two O-rings 22 provide sealing between the spindle 29 and the piston 10. Further, there is provided an adjustment ring 12 and a ringshaped stopper 13 at the end portion of the piston 10. These are used for axial adjustment of the valve spindle 29 and the piston 10.

The function of the mechanism:

The bottom side of the spring guiding member 4 is supported against the spring guiding roller 8 of the lever 3. Additionally, the piston rod roller 7 is engaged against inclined planes in the surface of the piston rod.

The piston rod and the spring guiding member 4 are shown in shaded form in Fig. 1. When the hydraulic pressure is activated, the piston 10 is forced from its outer to its inner position and moves the valve spindle 29 to an open position simultaneously as the spring mechanism 27 is compressed and the plate springs are loaded.

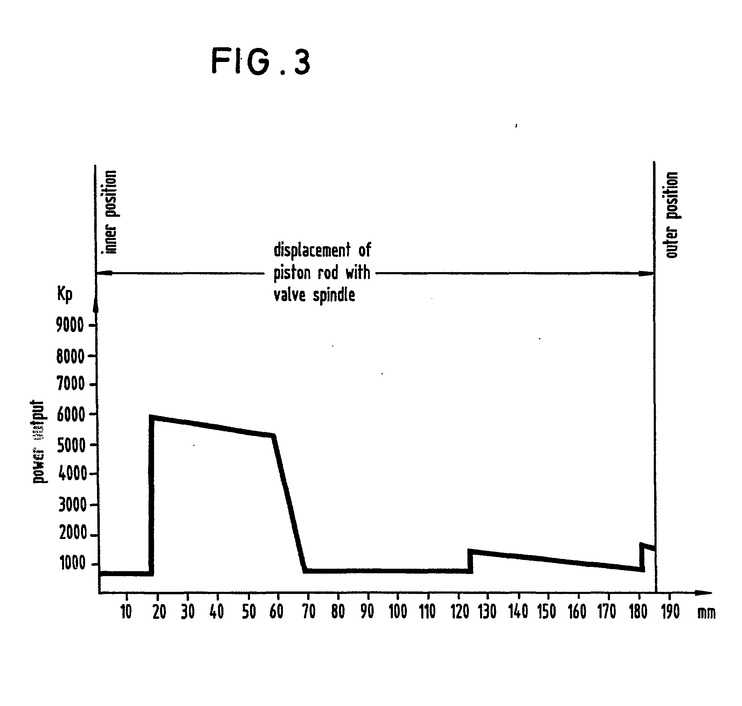

As can be seen from Fig. 3, the piston rod with valve spindle 29 connected will move over a distance of approx. 180 mm.

This movement is caused by means of a spring mechanism 27 having a total extension of 20 mm, which means that the displacement ratio is about 10:1. The spring mechanism 27 has a total length of 0.2–0.3 m, this being a relatively short length. The angle of inclination of the surface of the piston rod and the contour or outline of the bottom face of the guide member 4 determine this displacement ratio. The spring mechanism 27, therefore, can be made very short but still have a high driving power during its short length of movement. The stored energy can thereby by utilized efficiently while the physical dimensions at the same time will be small. The bottom face of the guiding member 4 extends at an angle of inclination of up to 20° in relation to the vertical plane, and the angle of inclination of the outer contour of the piston rod is adjusted in relation to this inclination so that the displacement ratio of 5:1 to 10:1 is obtained. The power output during tensioning and release of the spring mechanism 27 is illustrated by the diagram shown in Fig. 3. When the hydraulic pressure is applied, the piston 10 will start its movement from its 0-position with the spring mechanism 27 in released state, as seen in the upper sectional half according to Fig. 2.

After a movement of approx 20 mm length, during which a spring force of approx. 1000 kp (1kp = 10N) has to be overcome, the angle of inclination is increased to 20° and the spring force which has to be overcome is increased to approx. 6000 kp over a distance of approx. 35 mm. Thereafter the angle of inclination will decrease and the force in the spring will decrease to approx. 1000 kp. After a movement of approx. 125 mm, the angle of inclination will increase again corresponding to a spring force of approx. 1500 kp. Finally, near the end of the movement the angle of inclination will increase again, corresponding to a spring force of approx. 2000 kp. The force in this open state is to be kept continuously and this corresponds to stable operation conditions with the gate valve (not shown) kept in open position.

If for one reason or the other the force fails, a safety procedure is activated. The spring mechanism 27 is released and moves the spindle 29 controlling the closure of the gate valve in opposite sequence of what is described above.

At the beginning, a relatively high spring power is released to overcome any frictional forces and to start the movement of the piston 10. Thereafter the valve spindle 29 is moved slowly, but determined without release of the very high spring forces. Near the end of this movement the closing power is strongly increased to secure the cutting through of possible unwanted obstructions and the remaining spring energy is then employed for the complete closing of the valve. However, this is only an example of the utilization of the special spring power displacement ratio according to the invention.

It is, however, possible to alter the power output by changing the angles of inclination. It is possible thereby to adjust the power output in correspondence with different valves and valveclosing characteristics without changing the outer physical dimensions of the actuator.

The actuator is compact and provides a very flexible utilization of the energy in the spring mechanism 27 which gives a near to ideal utilization of sturdy plate springs moving very short lengths during release of energy. The thickness of the adjustment ring 12 can be varied and this will provide a flexible and simple adjustment means to be used for centration of the movable part of the valve by an axial movement of the outward valve spindle 29, shown in Fig. 2. The piston 10 is connected to the outward valve spindle 29 via the bolt 21.

## Claims

1. A single acting hydraulic actuator with variable return force, comprising an actuator unit (2, 10, 29) which includes a cylinder (2) and a cooperating piston (10) connected to an outward valve spindle (29), means for supplying pressurized fluid to the cylinder (2) and the piston (10), a driving member (4, 5, 27) mechanically connected to the piston (10) and the actuator unit (2, 10, 29) and including a housing (5), wherein is mounted a spring mechanism (27) on a spring guiding member (4), and means (15) for connecting the driving member (4, 5, 27) to a valve bonnet with passage means for the valve spindle (29), wherein the spring guiding member (4) and the piston (10) are mechanically drivingly connected by means of a variable displacement mechanism (3, 7, 8) which includes a number of levers (3) evenly distributed around the piston (10), each formed as a single arm lever (3) one end of which is rotatably mounted (at 9) within the housing (5) and the other end of which engages an outer bottom side of the spring guiding member (4) and an outer surface of the piston (10), wherein the outer surface of the piston (10) is formed by an outer surface of a piston rod inclining with varying inclination angle and being engaged in power transmission relation with piston rod rollers (7) which are rotatably mounted at the other end of the levers (3), and wherein spring guiding rollers (8) rotatably mounted at the other ends of the levers (3) engage the outer bottom side of the spring guiding member (4), characterized in that the outer bottom side of the spring guiding member (4) has an angle of inclination of up to 18° in relation to a plane orthogonal to its axis, and that the outer surface of the piston (10) has such a relation to this angle of inclination that a ratio of displacement from 1:5 to 1:10 is obtained.

2. The actuator as set forth in claim 1 characterized in that the angle of inclination of the outer bottom side of the spring guiding member (4) is increased in radial direction.

3. The actuator as set forth in claim 1 or claim 2 characterized in that starting from an 0-position of the piston (10), the angle of inclination of the outer surface of the piston rod has over a first distance a first value, then over a second distance a second value which is higher than the first value, then over a third distance a third value which is lower than the second value, then over a fourth distance a fourth value which is higher than the third value and finally over a fifth distance a value which is higher than the fourth value.

## Patentansprüche

1. Einfach wirkender Hydraulikantrieb mit variabler Rückstellkraft umfassend: eine Antriebseinheit (2, 10, 29), die einen Zylinder (2) und einen zusammenwirkenden Kolben (10) enthält, der an eine äußere Ventilspindel (29) angeschlossen ist, Mittel zum Zuführen von unter Druck stehendem Fluid zu dem Zylinder (2) und dem Kolben (10), ein Antriebsglied (4, 5, 27), das mechanisch an dem Kolben (10) und der Antriebseinheit (2, 10, 29) angeschlossen ist und ein Gehäuse (5) enthält, wobei ein Federmechanismus (27) an einem Federführungsglied (4) angebracht ist, und mit Mitteln (15) zum Anschließen des Antriebsglieds (4, 5, 27) an einer Ventilkappe mit Durchgangsmitteln für die Ventilspindel (29), wobei das Federführungsglied (4) und der Kolben (10) durch Mittel eines variablen Verschiebungsmechanismus (3, 7, 8) mechanisch treibend verbunden sind, der eine Anzahl von gleichmäßig um den Kolben (10) herum verteilten Hebeln (3) enthält, wobei jeder als ein einarmiger Hebel (3) geformt ist, dessen eines Ende drehbar (bei 9) innerhalb des Gehäuses (5) angebracht ist und dessen anderes Ende eine äußere Unterseite des Federführungsglieds (4) und eine äußere Oberfläche des Kolbens (10) angreift, wobei die äußere Oberfläche des Kolbens (10) durch eine äußere Oberfläche einer Kolbenstange geformt ist, die mit variablem Neigungswinkel geneigt ist und im Kraftübertragungsverhältnis mit Kolbenstangenrollen (7) in Angriff steht, welche an dem Außenende der Hebel (83) drehbar angebracht sind, und wobei an den Außenenden der Hebel (3) federführende Rollen (8) drehbar angebracht sind, die die äußere Unterseite des Federführungsglieds (4) angreifen, dadurch gekennzeichnet, daß die äußere Unterseite des Federführungsteils (4) einen Neigungswinkel von bis zu 18° im Verhältnis zu einer Ebene rechtwinklig zu dessen Achse hat, und daß die äußere Oberfläche des Kolbens (10) zu diesem Neigungswinkel ein solches Verhältnis hat, daß ein Verschiebungsverhältnis von 1:5 bis 1:10 erhalten wird.

2. Antrieb nach Anspruch 1, dadurch gekennzeichnet, daß der Neigungswinkel der äußeren Unterseite des Federführungsglieds (4) in radialer Richtung ansteigt.

3. Antrieb nach Anspruch 1 oder 2, dadurch gekennzeichnet, daß der Neigungswinkel der äußeren Oberfläche der Kolbenstange von einer 0-Position des Kolbens (10) beginnend über eine erste Distanz einen ersten Wert hat, dann über eine zweite Distanz einen zweiten Wert der höher als der erste Wert ist, dann über eine dritte Distanz einen dritten Wert der niedriger als der zweite Wert ist, dann über eine vierte Distanz einen vierten Wert der höher als der dritte Wert ist, und schließlich über eine fünfte Distanz einen Wert, der höher als der vierte Wert ist.

## Revendications

1. Un actioneur hydraulique à simple effet à force de rappel variable, comprenant:
une unité d'actionneur (2, 10, 29) qui comprend un cylindre (2) et un piston (10), relié à une tige de soupape (29), qui coopèrent, des moyens pour amener un fluide pressurisé au cylindre (2) et au piston (10), un organe d'entraînement (4, 5, 27) relié mécaniquement au piston (10) et à l'unité d'actionneur (2, 10, 29) et comprenant un boîtier (5), dans lequel un mécanisme à ressort (27), est monté sur un organe de guidage de ressort (4), et des moyens (15) pour relier l'organe d'entraînement (4, 5, 27) à un chapeau de valve comportant des moyens de passage pour la tige de valve (29), où l'organe de guidage de ressort (4) et le piston (10) sont reliés en entraînement mécanique au moyen d'un mécanisme à déplacement variable (3, 7, 8) qui comprend un certain nombre de leviers (3) répartis de façon uniforme autour du piston (10), formés chacun comme un bras de levier unique (3) dont une extrémité est montée à rotation (en 9) à l'intérieur du boîtier (5) et dont l'autre extrémité est en contact avec un côté extérieur du fond de l'organe de guidage de ressort (4) et une surface extérieure du piston (10),
où la surface extérieure du piston (10) est formée par une surface extérieure d'une tige de piston s'inclinant selon un angle d'inclination variable et étant en contact, en relation de transmission de puissance, avec des rouleaux de tige de piston (7) qui sont montés à rotation à l'autre extrémité des leviers (3), et où des rouleaux de guidage de ressort (8) montés à rotation sur les autres extrémités des leviers (3) viennent en contact avec le côté extérieur de fond de l'organe de guidage de ressort (4), caractérisé en ce que le côté extérieur de fond de l'organe de guidage de ressort (4) possède un angle d'inclination pouvant aller jusqu'à 18° par rapport au plan orthogonal à son axe et en ce que la surface extérieure du piston (10) présente, vis-à-vis de cet angle d'inclinaison, une relation telle qu'un rapport de déplacement de 1:5 à 1:10 est obtenu.

2. L'actionneur selon la revendication 1, caractérisé en ce que l'angle d'inclinaison du côté extérieur de fond de l'organe de guidage de ressort (4) augmente en direction radiale.

3. L'actionneur selon la revendication 1 ou la revendication 2, caractérisé en ce que, en partant d'une position 0 du piston (10), l'angle d'inclinaison de la surface extérieure de la tige de piston comporte, sur une première distance, une première valeur, puis, sur une deuxième distance, qui est supérieure à la première valeur, puis, sur une troisième distance, une troisième valeur qui est inférieure à la deuxième valeur, puis, sur une quatrième distance, une quatrième valeur qui est supérieure à la troisième valeur et finalement, sur une cinquième distance, une valeur qui est supérieure à la quatrième valeur.

FIG.1

FIG. 2.

EP 0 296 268 B1

# FIG.3